# FASCICULE DE BREVET EUROPEEN

(11) **EP 2 022 661 B1**
(45) Date de publication et mention de la délivrance du brevet: **29.09.2010**
(21) Numéro de dépôt: 08162042.9
(22) Date de dépôt: 07.08.2008
(51) Int. Cl.: B60K 37/00, B62D 1/18

(54) **Dispositif de réglage pour la position d'un tableau de bord et d'un volant associé**
Vorrichtung zur Positionsregulierung des Armaturenbretts und des damit verbundenen Lenkrads
Device for adjusting the position of an instrument panel and of an associated steering wheel

(30) Priorité: 08.08.2007 FR 0756995
(43) Date de publication de la demande: 11.02.2009
(73) Titulaire: ACTIA Automotive, 31400 Toulouse (FR)
(72) Inventeur: Balza Alain, 31240 SAINT-JEAN (FR)
(74) Mandataire: Colas, Jean-Pierre

(56) Documents cités:
- EP-A- 0 995 663
- EP-B- 0 857 118
- US-A- 4 580 647

## Description

La présente invention concerne un dispositif de réglage pour la position d'un ensemble de conduite comprenant un tableau de bord et un volant associé. Un tel dispositif est utilisé pour adapter la configuration d'un poste de conduite d'un véhicule à la taille d'un conducteur dudit véhicule.

Un tel dispositif est particulièrement décrit dans le document US 4.580.647. Dans ce document, le dispositif décrit permet de déplacer l'ensemble de conduite principalement d'avant en arrière. Cependant, un tel dispositif est adapté seulement pour de petits ensembles de conduite.

Or, il est assez général que dans les postes de conduite de camions ou d'autocars l'ensemble de conduite comprend un tableau de bord de grande dimension transversale. Dans un tel cas, un dispositif de l'art antérieur manque de rigidité. Ainsi, soit le tableau de bord tend à se déformer, soit son déplacement n'est pas symétrique, ce qui peut endommager ou faire dysfonctionner le dispositif et/ou l'ensemble de conduite.

Le document EP 0.857.118 décrit un dispositif adapté aux ensembles de conduite de grande dimension. Il comprend des supports suffisamment éloignés entre eux, ce qui permet d'assurer un soutien transversal bien réparti pour le tableau de bord. Ce dispositif comprend en outre des moyens de synchronisation adaptés pour assurer un déplacement homogène de l'ensemble de conduite, sur toute sa longueur. Ce dispositif et le système de synchronisation associé utilisent des jeux de glissières et d'engrenages complexes. Ils sont lourds et compliqués à mettre en oeuvre.

On connaît du document US 4 580 647 un dispositif de réglage pour un tableau de bord et un volant associé tel que défini par le préambule de la revendication 1.

On connaît également du document EP 0 995 663 un dispositif de conduite (pilotage) comprenant des moyens pour être basculé. De tels moyens sont conçus sous la forme de bras formant un parallélogramme.

Un but de l'invention est de trouver une nouvelle solution, plus simple et mieux adaptée pour régler la position d'un ensemble de conduite.

Selon l'invention, un tel dispositif de réglage pour un tableau de bord et un volant associé, notamment pour tableau de bord de grande dimension transversale, est défini par la revendication 1.

De préférence, on utilise deux ensembles de support disposés symétriquement l'un à l'autre. Pour permettre une translation simple, les quadrilatères peuvent sensiblement être des parallélogrammes.

Chacun des ensembles de support peut comprendre une biellette supérieure et une biellette inférieure, s'étendant chacune depuis une première articulation respective de la console vers une deuxième articulation respective du châssis, la biellette supérieure s'étendant depuis une première articulation située plus haut que l'autre première articulation. Alors, les biellettes forment le quadrilatère entre elles et leurs articulations. Les deux premières articulations peuvent définir entre elles un côté sensiblement dressé, de préférence sensiblement vertical, du quadrilatère déformable. Ce côté dressé, porté par la console, reste fixe relativement à la cabine de conduite, ce qui induit un déplacement, donc un réglage, essentiellement vertical de l'ensemble de conduite.

Avantageusement, les premières articulations sont du type pivot, autour d'un axe transversal respectif fixe relativement à la console, et, en ce que la deuxième articulation de la biellette inférieure étant du type pivot autour d'un axe transversal respectif fixe relativement au châssis.

Les moyens pour régler l'inclinaison longitudinale du châssis peuvent prévoir que la deuxième articulation de la biellette supérieure est conçue de sorte qu'elle permet le pivotement de la biellette supérieure relativement au châssis et/ou la rotation du châssis autour de l'axe de la deuxième articulation de la biellette inférieure. Ces moyens de réglage de l'inclinaison longitudinale du châssis peuvent comprendre, dans l'extrémité du châssis, une ouverture oblongue formant un arc de cercle autour de l'axe de la deuxième articulation de la biellette inférieure, une pièce d'articulation étant prévue pour :
- permettre le pivotement de la biellette supérieure autour d'un axe transversal de la pièce d'articulation, axe fixe relativement à la biellette supérieure; et/ou,
- le déplacement relatif de la pièce d'articulation le long de l'ouverture oblongue.

Les moyens de synchronisation peuvent comprendre une barre, de préférence sensiblement cylindrique, s'étendant entre une deuxième articulation d'un des ensembles de support et une deuxième articulation respective de l'autre ensemble de support, de préférence entre les deuxièmes articulations des biellettes supérieures. La barre peut porter au moins un flasque pour permettre un guidage, selon un plan longitudinal, de la déformation des moyens de support. Les pièces d'articulation forment des extrémités transversales de la barre.

Le dispositif comprend avantageusement des moyens pour verrouiller les ensembles de support dans une position choisie. Par exemple, la barre peut comprendre à chacune de ses extrémités un flasque extérieur disposé au-delà d'une deuxième articulation verrouillable respective, les moyens de verrouillage peuvent comprendre :
- un flasque intérieur, disposé en deçà de chacune des deuxièmes articulations verrouillables ;
- des moyens pour exercer une pression sur chaque flasque intérieur de sorte que la biellette correspondante et le châssis soient comprimés entre eux et entre les flasques extérieur et intérieur au voisinage de l'articulation verrouillable correspondante ; et,
- des moyens pour libérer les flasques intérieurs de ladite pression.

De préférence, les moyens de verrouillage sont montés librement coulissants sur la barre, de sorte que les pressions de verrouillage sont naturellement sensiblement identiques sur chacun des ensembles de support.

On préfère que le dispositif permette un déplacement essentiellement vertical du châssis. Le réglage en profondeur étant essentiellement assuré par le déplacement du siège du conducteur du véhicule.

D'autres particularités et avantages de l'invention ressortiront encore de la description ci-après, relative à un exemple non limitatif. Dans cette description, on utilisera le terme longitudinal pour désigner une chose s'étendant selon la direction d'avancement d'un véhicule équipé du dispositif décrit. De même, le terme transversal désignera une chose s'étendant selon une direction horizontale perpendiculaire à un axe longitudinal du véhicule.

Aux dessins annexés :
- la figure 1 est une vue schématique, dans un plan longitudinal, d'un mode de réalisation pour un dispositif de réglage selon l'invention ;
- la figure 2 est une vue partiellement arrachée du dispositif de la figure 1, dans le même plan ;
- La figure 3 est une vue en perspective du dispositif de la figure 2
- La figure 4 est une vue éclatée de la figure 3 ; et,
- La figure 5 est une vue schématisée des moyens de verrouillage et de synchronisation du dispositif de la figure 2.

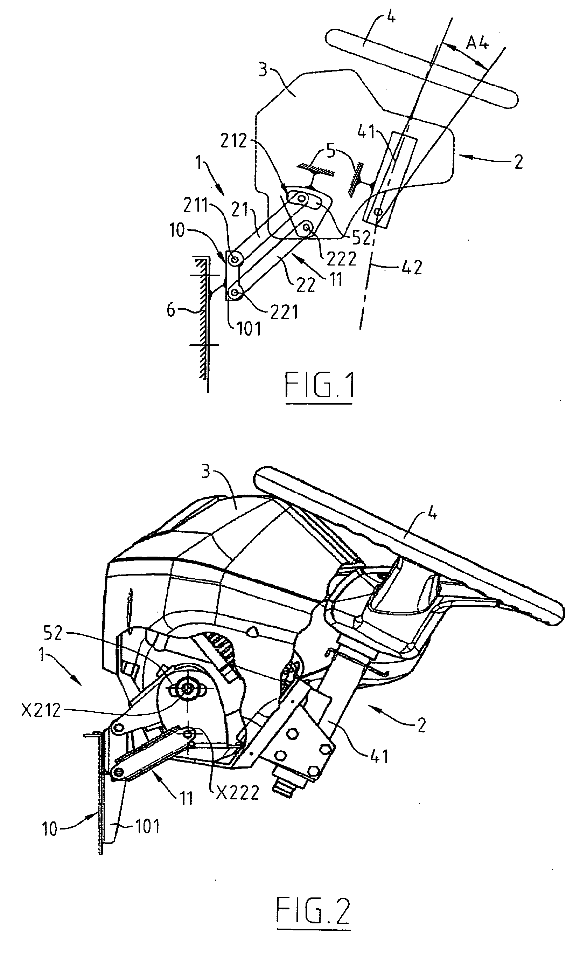

La figure 1 est un schéma illustrant le fonctionnement d'un dispositif 1, selon l'invention, pour le réglage de la position d'un ensemble de conduite 2 d'un véhicule. La figure 2 est une vue moins schématique, similaire à la figure 1.

A la figure 1 l'ensemble de conduite 2 est illustré en traits interrompus. Cet ensemble de conduite comprend un tableau de bord 3 et un volant 4. Le volant 4 est monté sur une colonne de direction 41,42 articulée et télescopique, par exemple selon un principe déjà connu de l'art antérieur, illustrée en traits mixte à la figure 1. Le dispositif comprend un châssis 5 sur lequel sont fixés le volant 4, le tableau de bord 3 et le dispositif 1. Le châssis 5 assure une rigidité suffisante de l'ensemble de conduite 2.

En outre, le dispositif 1 est fixé à une structure 6 de la cabine du véhicule, structure illustrée par une zone hachurée, en bas à gauche de la figure 1. Le dispositif assure une liaison déformable entre la structure 6 et l'ensemble de conduite 2. Dans l'exemple illustré, la déformation est prévue pour se faire parallèlement à un plan sensiblement vertical et longitudinal, qui est celui des figures 1 et 2.

Le dispositif 1 comprend une console 10 prévue pour être rigidement fixée sur la structure 6. La console s'étend principalement transversalement, sensiblement sur toute la largeur du dispositif 1. Le dispositif 1 comprend en outre deux ensembles de support 11,12, articulés chacun à une extrémité respective 101 de la console 10, et sur une extrémité correspondante 51 du châssis 5.

La console 10 est réalisée en tôle pliée et soudée. Son extrémité 101 a la forme d'une aile repliée vers l'arrière, sensiblement dans un plan vertical longitudinal. La console 5 est elle aussi réalisée en tôle pliée et soudée. Son extrémité 51 a la forme d'une aile repliée sensiblement dans un plan vertical longitudinal.

Les ensembles 11,12 sont symétriques l'un de l'autre et disposés symétriquement l'un à l'autre. Chaque ensemble de support 11,12 forme avec la console et le châssis un quadrilatère déformable. Dans l'exemple décrit, ce quadrilatère est un parallélogramme. Chaque ensemble 11,12 comprend essentiellement deux biellettes 21,22 s'étendant chacune entre l'extrémité 101 de la console et l'extrémité respective 51 du châssis.

Parmi ces deux biellettes, une biellette supérieure 21 s'étend entre une première articulation 211, formée avec un partie haute de l'aile 101 et une deuxième articulation 212 formée avec une partie haute de l'aile 51. L'autre biellette est une biellette inférieure 22, disposée sous et parallèlement à la biellette supérieure, entre une première articulation 221 formée avec une partie basse de l'aile 101 et une deuxième articulation 222 formée avec une partie basse de l'aile 51 correspondante.

Chacune des articulations 211, 221, 222 est une articulation de type pivot autour d'un axe respectif transversal. Les premières articulations 211 et 221 sont toutes dans un même plan vertical transversal. La deuxième articulation 212 de chaque biellette supérieure 21 comprend une fenêtre 52 oblongue formée dans la partie supérieure de l'aile 51. Cette fenêtre 52 forme un arc de cercle autour de l'axe X222 de la deuxième articulation 222 de la biellette inférieure 22. Une pièce d'articulation 71, en forme de tourillon d'axe X212, est montée pivotante dans la biellette supérieure est prévue pour venir coulisser et/ou pivoter dans la fenêtre 52. L'axe X212 du tourillon forme axe de pivotement pour l'articulation 212.

Ainsi, un parallélogramme déformable étant réalisé entre les quatre articulations 211,212,221,222 respectives de chaque ensemble de support 11,12, la déformation simultanée des ensembles support permet une translation de l'ensemble de conduite. En outre, dans l'exemple illustré, les positions angulaires des biellettes sont limitées de sorte que les biellettes s'étendent toujours principalement horizontalement, c'est-à-dire avec un angle inférieur à 45° au-dessus de l'horizontal, de préférence inférieur à 30°. Ainsi, le déplacement de l'ensemble de conduite se fait essentiellement verticalement. Le déplacement horizontal est faible. Ainsi, si l'on abaisse l'ensemble de conduite, on ne risque pas d'empiéter sur l'espace disponible dans la cabine de conduite.

En plus de la translation, un basculement de l'ensemble 2 autour de l'axe X222 est possible, dans la limite des possibilités de déplacement relatif de la pièce d'articulation 71 dans la fenêtre 52. Ainsi, l'axe 41 du volant peut prendre les positions définies par le secteur angulaire A4, à la figure 1.

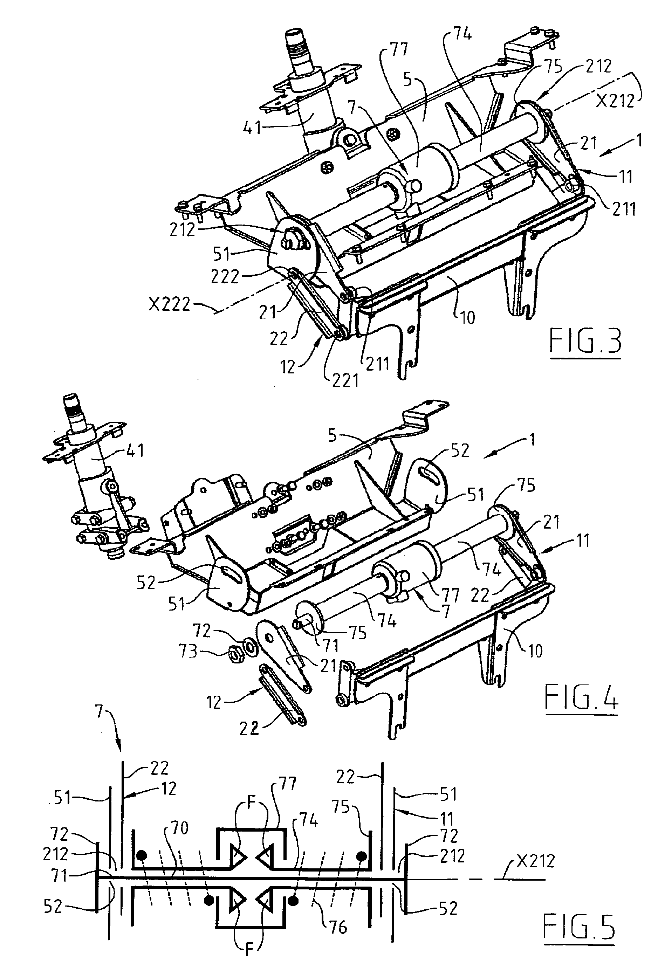

Afin d'assurer que les déformations des deux éléments de support 11,12 seront bien synchrones, le dispositif de réglage 1 comprend en outre des moyens de synchronisation 7, schématiquement représentés à la figure 5. Ces moyens de synchronisation comprennent une barre sensiblement cylindrique transversale 70 s'étendant entre les deux ensembles de support 11, 12. Les extrémités de la barre 70 forment chacune une pièce d'articulation 71 d'un ensemble de support respectif. Chaque pièce d'articulation s'étend au travers de la biellette supérieure puis de l'aile 51 respectives et au-delà. Dans un flasque 72, en forme de rondelle monté sur l'extrémité libre de la pièce d'articulation 71 et qui y est fixé par un écrou 73.

Les moyens de synchronisation comprennent en outres deux pistons 74 montés symétriquement l'un de l'autre sur la barre 70. Chaque piston porte à une extrémité distale respective un contre-flasque 75. A l'endroit de chaque articulation 212, l'aile et la biellette supérieure sont disposés entre un flasque 72 et un contre-flasque 75 respectifs. Un ressort respectif 76, illustré en traits interrompus à la figure 5, tend à déplacer chaque piston en direction de l'extrémité 71 de la barre.

Lorsque l'ensemble de conduite 2 est en position d'être utilisé, le flasque 72 et le contre-flasque 75 associé exercent conjointement, sous l'action du ressort, une pression sur l'aile 51 et la biellette supérieure 21 respectives, autour de l'articulation 212. Cette articulation est ainsi immobilisée, et l'ensemble de conduite 2 est immobilisé dans la position choisie pour la conduite. Ceci procure donc des moyens de verrouillage pour le dispositif 1.

Les moyens de synchronisation et de verrouillage 7 comprennent en outre un vérin 77 pneumatique. Ce vérin est disposé sensiblement à mi-chemin sur la barre 70. Il est conçu de façon à ce que, lorsqu'il est activé, il agit sur les extrémités distales des pistons 74, de sorte qu'il les rapproche l'une de l'autre selon les flèches F, à l'encontre de l'action des ressorts 76. Ainsi, l'activation du vérin 77 libère l'articulation 212 de l'action des flasques 72,75, et l'ensemble de conduite 5 peut être déplacé, en translation et/ou en rotation. Outre une fonction de blocage, l'un ou les deux parmi les flasques 72,75 peuvent alors assurer une fonction de guidage, par glissement le long de l'aile 51 et/ou de la biellette, ce qui permet une déformation synchrone des deux éléments de support 11,12.

L'ensemble des pistons 74 et du vérin 77 est monté flottant sur la barre 70, de sorte que les efforts qu'il exerce lors du verrouillage sont naturellement répartie de façon équilibré sur les deux éléments de soutien.

Bien sûr, l'invention n'est pas limitée à l'exemple qui vient d'être décrit et de nombreux aménagements peuvent être apportés à cet exemple sans sortir du cadre de l'invention.

Ainsi, les moyens de verrouillage peuvent être d'un autre type, il peuvent aussi être électriques mécaniques ou hydrauliques plutôt que pneumatiques.

## Revendications

1. Dispositif (1) de réglage pour un tableau de bord (3) et un volant associé (4), notamment pour tableau de bord de grande dimension transversale, comprenant :
- une console (10) pour fixer ledit dispositif dans une cabine de conduite (6) d'un véhicule ;
- un châssis (5) pour y fixer le tableau de bord et le volant ;
- un premier ensemble de support (11) et un deuxième ensemble de support (12) formant des quadrilatères déformables reliant chacun une extrémité transversale (101) respective de ladite console avec une extrémité transversale (51) respective dudit châssis (5), lesdits premier et second ensembles support formant des moyens de déplacement en translation dudit châssis (5) ;
- des moyens de synchronisation (7) reliant le premier avec le deuxième ensemble de support,
**caractérisé en ce qu'** il comprend des moyens de réglage (52,71) de l'inclinaison longitudinale du châssis (5) indépendants des moyens de déplacement en translation.

2. Dispositif selon la revendication 1, **caractérisé en ce que** chacun des ensembles de support comprend une biellette supérieure (21) et une biellette inférieure (22) et **en ce qu'**une articulation (212) de la biellette supérieure (21) est conçue de sorte qu'elle permet le pivotement de la biellette supérieure relativement au châssis et/ou la rotation du châssis autour de l'axe (X222) de l'articulation de la biellette inférieure.

3. Dispositif selon la revendication 1 ou 2, **caractérisé en ce que** les ensembles de support sont disposés symétriquement l'un à l'autre.

4. Dispositif selon l'une quelconque des revendications 1 à 3, **caractérisé en ce que** les quadrilatères sont sensiblement des parallélogrammes.

5. Dispositif selon l'une quelconque des revendications 1 à 4, **caractérisé en ce que** chacun des ensembles support comprend une biellette supérieure (21) et une biellette inférieure (22), s'étendant chacune depuis une première articulation respective (211,221), de la console (10) vers une deuxième articulation respective (212,222) du châssis (5), la biellette supérieure s'étendant depuis une première articulation (211) située plus haut que l'autre première articulation (221).

6. Dispositif selon la revendication 5, **caractérisé en ce que** les deux premières articulations (211,221) définissent entre elles un côté sensiblement dressé, de préférence sensiblement vertical, du quadrilatère déformable.

7. Dispositif selon la revendication 5 ou 6, **caractérisé en ce que** les premières articulations (211,221) sont du type pivot, autour d'un axe transversal respectif fixe relativement à la console (10), et, **en ce que** la deuxième articulation de la biellette inférieure étant du type pivot autour d'un axe transversal (X222) respectif fixe relativement au châssis (5).

8. Dispositif selon l'une quelconque des revendications précédentes, **caractérisé en ce que** l'extrémité (51) du châssis comprend une ouverture oblongue (52) formant un arc de cercle autour de l'axe (X222) de la deuxième articulation (222) de la biellette inférieure (22), une pièce d'articulation (71) étant prévue pour :
- permettre le pivotement de ladite biellette supérieure autour d'un axe transversal (X212) de ladite pièce d'articulation, axe fixe relativement à ladite biellette supérieure (21) ; et/ou,
- le déplacement relatif de ladite pièce d'articulation le long de ladite ouverture oblongue.

9. Dispositif selon l'une des revendications 1 à 8, **caractérisé en ce que** les moyens de synchronisation (7) comprennent une barre (70), de préférence sensiblement cylindrique, s'étendant entre une deuxième articulation (212) d'un des ensembles de support (11) et une deuxième articulation respective (212) de l'autre ensemble de support (12).

10. Dispositif selon la revendication 9, **caractérisé en ce que** la barre (70) s'étend entre les deuxièmes articulations (212) des biellettes supérieures (21).

11. Dispositif selon la revendication 9 ou 10, **caractérisé en ce que** la barre porte au moins un flasque (72,75) pour permettre un guidage, selon un plan longitudinal, de la déformation des moyens de support.

12. Dispositif selon la revendication 8 et selon l'une quelconques des revendications 9 à 11, **caractérisé en ce que** les pièces d'articulation (71) forment des extrémités transversales de ladite barre (70).

13. Dispositif selon l'une des revendications 1 à 12, **caractérisé en ce qu'**il comprend des moyens (74-77) pour verrouiller les ensembles de support dans une position choisie.

14. Dispositif selon les revendications 8 et 13 et selon l'une quelconques des revendications 9 à 12, la barre comprend à chacune de ses extrémités un flasque extérieur (72) disposé au-delà d'une deuxième articulation verrouillable (212) respective, et en ce que les moyens de verrouillage (74-77) comprennent :
- un flasque intérieur (75), disposé en deçà de chacune des deuxièmes articulations verrouillables (212);
- des moyens (76) pour exercer une pression sur chaque flasque intérieur de sorte que la biellette correspondante et le châssis soient comprimés entre eux et entre les flasques extérieur et intérieur au voisinage de l'articulation verrouillable correspondante ; et,
- des moyens (77) pour libérer les flasques intérieurs de ladite pression.

15. Dispositif selon la revendication 13 ou 14, **caractérisé en ce que** les moyens de verrouillage (74-77) sont montés librement coulissants sur la barre (70).

16. Dispositif selon l'une des revendications 1 à 15, **caractérisé en ce qu'**il est conçu pour permettre un déplacement essentiellement vertical du châssis.

## Claims

1. Adjustment device (1) for an instrument panel (3) and an associated steering wheel (4), particularly for an instrument panel of large transverse dimensions, comprising:
- a bracket (10) for fixing said device in a cab (6) of a vehicle;
- a frame (5) for fixing the instrument panel and steering wheel there;
- a first support unit (11) and a second support unit (12) forming deformable quadrilaterals each connecting a respective transverse end (101) of said bracket to a respective transverse end (51) of said frame (5), said first and second support units forming means for movement in translation of said frame (5);
- synchronisation means (7) connecting the first support unit to the second support unit,
**characterised in that** it comprises adjusting means (52, 71) for the longitudinal inclination of the frame (5), which are independent from the means for movement in translation.

2. Device according to claim 1, **characterised in that** each of the support units comprises an upper connecting rod (21) and a lower connecting rod (22) and **in that** a joint (212) of the upper connecting rod (21) is designed so that it allows pivoting of the upper connecting rod relative to the frame and / or rotation of the frame about the axis (X222) of the joint of the lower connecting rod.

3. Device according to claim 1 or 2, **characterised in that** the support units are disposed symmetrically to each other.

4. Device according to any one of the claims 1 to 3, **characterised in that** the quadrilaterals are essentially parallelograms.

5. Device according to any one of the claims 1 to 4, **characterised in that** each of the support units comprises an upper connecting rod (21) and a lower connecting rod (22), each extending from a first respective joint (211, 221) of the bracket (10) to a second respective joint (212, 222) of the frame (5), the upper connecting rod extending from a first joint (211) situated higher than the other, first joint (221).

6. Device according to claim 5, **characterised in that** the first two joints (211, 221) define between them an essentially straight side, preferably substantially vertical, of the deformable quadrilateral.

7. Device according to claim 5 or 6, **characterised in that** the first joints (211, 221) are of the pivot type about a respective transverse axis which is fixed relative to the bracket (10), and **in that** the second joint of the lower connecting rod is of the pivot type about a respective transverse axis (X222) which is fixed relative to the frame (5).

8. Device according to any one of the preceding claims, **characterised in that** the end (51) of the frame comprises a rectangular opening (52) forming the arc of a circle around the axis (X222) of the second joint (222) of the lower connecting rod (22), a joint element (71) being provided:
- in order to allow the pivoting of said upper connecting rod about a transverse axis (X212) of said joint element, an axis fixed relative to said upper connecting rod (21); and / or
- the relative movement of said joint element along said rectangular opening.

9. Device according to one of the claims 1 to 8, **characterised in that** the synchronisation means (7) comprise a bar (70), which is preferably essentially cylindrical, extending between a second joint (212) of one of the support units (11) and a second respective joint (212) of the other support unit (12).

10. Device according to claim 9, **characterised in that** the bar (70) extends between the second joints (212) of the upper connecting rods (21).

11. Device according to claim 9 or 10, **characterised in that** the bar has at least one flange (72, 75) to allow guiding, according to a longitudinal plane, of the deformation of the support means.

12. Device according to claim 8 and according to any one of the claims 9 to 11, **characterised in that** the joint elements (71) form transverse ends of said bar (70).

13. Device according to any one of the claims 1 to 12, **characterised in that** it comprises means (74-77) for locking the support units in a chosen position.

14. Device according to claims 8 and 13 and according to any one of the claims 9 to 12, wherein the bar comprises at each of its ends an outer flange (72) disposed beyond a second respective lockable joint (212) and in that the locking means (74-77) comprise:
- an inner flange (75) disposed on this side of each of the second lockable joints (212);
- means (76) for exerting pressure on each inner flange in such a way that the corresponding connecting rod and the frame are compressed between themselves and between the outer and inner flanges in the vicinity of the corresponding lockable joint; and
- means (77) for releasing the inner flanges from said pressure.

15. Device according to claim 13 or 14, **characterised in that** the locking means (74-77) are mounted so as to slide freely on the bar (70).

16. Device according to one of the claims 1 to 15, **characterised in that** it is designed to facilitate substantially vertical displacement of the frame.

## Patentansprüche

1. Vorrichtung (1) zum Einstellen für ein Armaturenbrett (3) und ein dazu gehörendes Lenkrad (4), insbesondere für ein Armaturenbrett mit großem Quermaß, die Folgendes aufweist:
- einen Konsole (10) zum Befestigen der Vorrichtung in einer Fahrerkabine (6) eines Fahrzeugs;
- ein Chassis (5), an dem das Armaturenbrett und das Lenkrad befestigt werden,
- eine erste Stützeinheit (11) und eine zweite Stützeinheit (12), die verformbare Vierecke bilden, die jeweils ein jeweiliges Querende (101) der Konsole mit einem jeweiligen Querende (51) des Chassis (5) verbinden, wobei die erste und die zweite Stützeinheit Mittel zum Verschiebungsbewegen des Chassis (5) bilden;
- Synchronisationsmittel (7), die die erste Stützeinheit mit der zweiten Stützeinheit verbinden,
**dadurch gekennzeichnet, dass** sie Einstellmittel (52, 71) der Längsneigung des Chassis (5) aufweist, die von den Verschiebungsbewegungsmitteln unabhängig sind.

2. Vorrichtung nach Anspruch 1, **dadurch gekennzeichnet, dass** jede der Stützeinheiten einen oberen Schwingarm (21) und einen unteren Schwingarm (22) aufweist und dass eine Anlenkung (212) des oberen Schwingarms (21) derart konzipiert ist, dass sie das Schwenken des oberen Schwingarms in Bezug zu dem Chassis und/oder die Drehung des Chassis um die Achse (X222) der Anlenkung des unteren Schwingarms erlaubt.

3. Vorrichtung nach Anspruch 1 oder 2, **dadurch gekennzeichnet, dass** die Stützeinheiten symmetrisch zueinander angeordnet sind.

4. Vorrichtung nach einem der Ansprüche 1 bis 3, **dadurch gekennzeichnet, dass** die Vierecke im Wesentlichen Parallelogramme sind.

5. Vorrichtung nach einem der Ansprüche 1 bis 4, **dadurch gekennzeichnet, dass** jede der Stützeinheiten einen oberen Schwingarm (21) und einen unteren Schwingarm (23) aufweist, die sich jeweils von einer ersten jeweiligen Anlenkung (211, 221) der Konsole (10) zu einer zweiten jeweiligen Anlenkung (212, 222) des Chassis (5) erstrecken, wobei sich der obere Schwingarm von einer ersten Anlenkung (211) erstreckt, die höher liegt als die andere erste Anlenkung (221).

6. Vorrichtung nach Anspruch 5, **dadurch gekennzeichnet, dass** die zwei ersten Anlenkungen (211, 221) miteinander eine im Wesentlichen aufrechte, vorzugsweise im Wesentlichen vertikale Seite des verformbaren Vierecks definieren.

7. Vorrichtung nach Anspruch 5 oder 6, **dadurch gekennzeichnet, dass** die ersten Anlenkungen (211, 221) des Typs sind, der um eine jeweilige Querachse, die zu der Konsole (10) stationär ist, schwenkt, und dass die zweite Anlenkung des unteren Schwingarms des Typs ist, der um eine jeweilige Querachse (X222), die zu dem Chassis (5) stationär ist, schwenkt.

8. Vorrichtung nach einem der vorhergehenden Ansprüche, **dadurch gekennzeichnet, dass** das Ende (51) des Chassis eine längliche Öffnung (52) aufweist, die einen Kreisbogen um die Achse (X222) der zweiten Anlenkung (222) des unteren Schwingarms (22) aufweist, wobei ein Anlenkteil (71) vorgesehen ist, um:
- das Schwenken des oberen Schwingarms um eine Querachse (X212) des Anlenkteils zu erlauben, wobei die Achse in Bezug zu dem oberen Schwingarm (21) stationär ist; und/oder
- die relative Verschiebung des Anlenkteils entlang der länglichen Öffnung zu erlauben.

9. Vorrichtung nach einem der Ansprüche 1 bis 8, **dadurch gekennzeichnet, dass** die Synchronisationsmittel (7) eine Stange (70) aufweisen, die vorzugsweise im Wesentlichen zylindrisch ist, die sich zwischen einer zweiten Anlenkung (212) einer der Stützeinheiten (11) und einer jeweiligen zweiten Anlenkung (212) der anderen Stützeinheit (12) erstreckt.

10. Vorrichtung nach Anspruch 9, **dadurch gekennzeichnet, dass** sich die Stange (70) zwischen den zweiten Anlenkungen (212) der oberen Schwingarme (21) erstreckt.

11. Vorrichtung nach Anspruch 9 oder 10, **dadurch gekennzeichnet, dass** die Stange mindestens einen Flansch (72, 75) trägt, um ein Führen der Verformung der Stützmittel entlang einer Längsebene zu erlauben.

12. Vorrichtung nach Anspruch 8 und nach einem der Ansprüche 9 bis 11, **dadurch gekennzeichnet, dass** die Anlenkteile (71) Querenden der Stange (70) bilden.

13. Vorrichtung nach einem der Ansprüche 1 bis 12, **dadurch gekennzeichnet, dass** sie Mittel (74-77) aufweist, um die Stützeinheiten in einer ausgewählten Stellung zu verriegeln.

14. Vorrichtung nach den Ansprüchen 8 und 13 und nach einem der Ansprüche 9 bis 12, wobei die Stange an jedem ihrer Enden einen Außenflansch (72) aufweist, der jenseits einer jeweiligen zweiten verriegelbaren Anlenkung (212) angeordnet ist, und dass die Verriegelungsmittel (74-77) Folgendes aufweisen:
- einen Innenflansch (75), der diesseits der zweiten verriegelbaren Anlenkungen (212) angeordnet ist;
- Mittel (46), um auf jeden Innenflansch einen Druck derart auszuüben, dass der entsprechende Schwingarm und das Chassis zwischen einander und zwischen dem Außenflansch und dem Innenflansch in der Nähe der entsprechenden verriegelbaren Anlenkung komprimiert werden; und
- Mittel (77), um die Innenflansche von dem Druck zu befreien.

15. Vorrichtung nach Anspruch 13 oder 14, **dadurch gekennzeichnet, dass** die Verriegelungsmittel (74-77) auf der Stange (70) frei gleitend montiert sind.

16. Vorrichtung nach einem der Ansprüche 1 bis 15, **dadurch gekennzeichnet, dass** sie konzipiert ist, um eine im Wesentlichen vertikale Verschiebung des Chassis zu erlauben.
